# EUROPEAN PATENT APPLICATION

(11) **EP 4 317 024 A1**
(43) Date of publication of application: **07.02.2024**
(21) Application number: 22780573.6
(22) Date of filing: 25.03.2022
(51) Int. Cl.: B65G 1/00, G07F 9/00

(54) **STORAGE BOX**

(30) Priority: 31.03.2021 JP 2021059435
(71) Applicant: Daikin Industries, Ltd., Osaka-Shi, Osaka 530-0001 (JP)
(72) Inventor: MUKAIDANI, Toshiaki, Osaka-shi, Osaka 530-8323 (JP); SATO, Kiichiro, Osaka-shi, Osaka 530-8323 (JP); MATSUI, Hidenori, Osaka-shi, Osaka 530-8323 (JP); YAMAUCHI, Junko, Osaka-shi, Osaka 530-8323 (JP); INOUE, Hiroko, Osaka-shi, Osaka 530-8323 (JP); KATADA, Chiharu, Osaka-shi, Osaka 530-8323 (JP)
(74) Representative: Hoffmann Eitle
(86) International application number: PCT/JP2022/014412
(87) International publication number: WO 2022/210360

(57) **Abstract**

A storage includes: an automatic transport part configured to move between a loading area where a user loads goods and a storage area where the goods loaded by the user are stored; a detecting part configured to detect a state in the loading area; and a determining part configured to determine whether the goods loaded in the loading area can be stored in the storage area, based on the state in the loading area detected by the detecting part.

## Description

### Technical Field

The present disclosure relates to a storage.

### Background Art

Conventionally, vending machines have been known in which, at the time of sale, the product is dropped to the product pick-up part and picked up from there by opening/closing an opening that is provided to face the outside of the product pick-up part. Also, a technique has been disclosed, whereby a vending machine like this detects whether or not a product or foreign matter other than a product is in the product pick-up part, and, when a product or foreign matter is detected, the door for opening and closing the opening opens, and a message indicating that the product or foreign matter should be picked up is displayed.

### Related-Art Document

### Patent Document

Patent Document 1: Japanese Patent Application No. 2000-298761

### Summary of the Invention

### Problem to be Solved by the Invention

With the conventional technique described above, it is not possible to determine whether what is in the product pick-up part is a product or foreign matter. So, even when there is something in the product pick-up part, it is difficult, with the conventional technique, to determine whether it is foreign matter (including a small animal or the like) that has intruded in, a product that has been forgotten, or foreign matter that has been inserted to make mischief, and therefore it is not possible to prevent foreign matter from entering the vending machine, or prevent inappropriate use of the vending machine.

The present disclosure therefore aims to prevent entry of foreign matter or prevent inappropriate use of foreign matter.

### Means for Solving the Problem

According to a first example of the present disclosure, a storage includes: an automatic transport part configured to move between a loading area where a user loads goods and a storage area where the goods loaded by the user are stored; a detecting part configured to detect a state in the loading area; and a determining part configured to determine whether the goods loaded in the loading area can be stored in the storage area, based on the state in the loading area detected by the detecting part.

According to the first example of the present disclosure, it is possible to prevent entry of foreign matter or prevent inappropriate use by foreign matter.

Also, based on the storage according to the first example, in a second example of the present disclosure, the detecting part detects sound, and the determining part determines whether the loaded goods can be stored in the storage area based on the sound detected by the detecting part.

According to the second example of the present disclosure, it is possible to determine whether the loaded goods can be stored in the storage area, based on the sound produced from the goods.

Also, based on the storage according to the first or second example, in a third example of the present disclosure, the detecting part detects movement of the goods loaded in the loading area, and the determining part determines that the loaded goods cannot be stored in the storage area based on a detection result by the detecting part.

According to the third example of the present disclosure, it is possible to determine whether or not the loaded goods can be stored in the storage area, depending on whether or not the goods show movement.

Also, based on the storage according to any one of the first to third examples, in a fourth example of the present disclosure, the detecting part detects a temperature of the goods loaded in the loading area, and the determining part determines that the loaded goods cannot be stored in the storage area when the temperature of the loaded goods is outside a predetermined range, based on a detection result by the detecting part.

According to the fourth example of the present disclosure, it is possible to determine whether or not the loaded goods can be stored in the storage area, depending on the temperature of the goods.

Also, based on the storage according to any one of the first to fourth examples, in a fifth example of the present disclosure, the detecting part detects a weight of the goods loaded in the loading area, and the determining part determines whether the loaded goods can be stored in the storage area based on the weight of the loaded goods detected by the detecting part.

According to the fifth example of the present disclosure, it is possible to determine whether or not the loaded goods can be stored in the storage area, depending on the weight of the goods.

Also, based on the storage according to any one of the first to fifth examples, in a sixth example of the present disclosure, the detecting part detects a smell of the goods loaded in the loading area, and the determining part determines whether the loaded goods can be stored in the storage area based on the smell of the loaded goods in the loading area detected by the detecting part.

According to the sixth example of the present disclosure, it is possible to determine whether the loaded goods can be stored in the storage area, depending on the smell of the goods.

Also, based on the storage according to any one of the first to sixth examples, a seventh example of the present disclosure further includes a removal part configured to remove foreign matter when the loaded goods are identified as the foreign matter that cannot be stored in the storage area.

According to the seventh example of the present disclosure, foreign matter can be removed.

Also, based on the storage according to the seventh example, in an eighth example of the present disclosure, the removal part is provided in the loading area.

According to the eighth example of the present disclosure, foreign matter can be removed in the loading area.

Also, based on the storage according to any one of the first to eighth examples, in a ninth example of the present disclosure, after the loaded goods are transported to the storage area by the automatic transport part, the determining part further determines whether or not there are other goods in the loading area, based on the detection result by the detecting part.

According to the ninth example of the present disclosure, other foreign matter that remains in the loading area can be detected.

Also, based on the storage according to any one of the first to ninth examples, a tenth example of the present disclosure further includes an output part configured to send a notification that foreign matter that cannot be stored in the storage area has been detected when the loaded goods are identified as the foreign matter.

According to the tenth example of the present disclosure, it is possible to notify the user that foreign matter has been detected.

Also, based on the storage according to the tenth example, in an eleventh example of the present disclosure, when other goods are detected in the loading area after the loaded goods are transported to the storage area, the output part sends a notification that the other goods remain in the loading area.

According to the eleventh example of the present disclosure, it is possible to prevent goods other than the goods that should be stored from remaining in the loading area.

Also, based on the storage according to the tenth or eleventh example, in a twelfth example of the present disclosure, the output part sends the notification to an external device via a network.

According to the twelfth example of the present disclosure, it is possible to notify an administrator or the like who is located far away from the storage, that foreign matter has been detected.

Also, based on the storage according to the tenth or eleventh example, a thirteenth example of the present disclosure further includes a display part configured to display information that shows the state in the storage, and the output part displays the notification on the display part.

According to the thirteenth example of the present disclosure, it is possible to notify the user operating the storage that foreign matter has been detected.

Also, a storage according to a fourteenth example of the present disclosure includes: an automatic transport part configured to move goods between an area where the goods are loaded and picked up, and a storage area where the goods loaded into the area are stored; a detecting part configured to detect a state in the area; and a determining part configured to determine whether the goods moved from the storage area to the area have been taken out from the area, based on the state detected by the detecting part.

According to the fourteenth example of the present disclosure, it is possible to prevent the user from forgetting to pick up goods or loading foreign matter intentionally.

### Brief Description of the Drawings

[FIG. 1] FIG. 1 is a diagram for explaining an example of the exterior and interior of a storage;
[FIG. 2] FIG. 2 is a first diagram for explaining a loading area;
[FIG. 3] FIG. 3 is a second diagram for explaining the loading area;
[FIG. 4A] FIG. 4A is a diagram that illustrates an example hardware structure of a control device;
[FIG. 4B] FIG. 4B is a diagram for explaining functions of the control device;
[FIG. 5] FIG. 5 is a flowchart for explaining the process in a control device included in a storage;
[FIG. 6] FIG. 6 is a first diagram for explaining the opening/closing operations of slide doors;
[FIG. 7] FIG. 7 is a second diagram for explaining the opening/closing operations of slide doors;
[FIG. 8] FIG. 8 is a third diagram for explaining the opening and closing operations of slide doors; and
[FIG. 9] FIG. 9 is a diagram for explaining a removal area.

### Detailed Description of the Invention

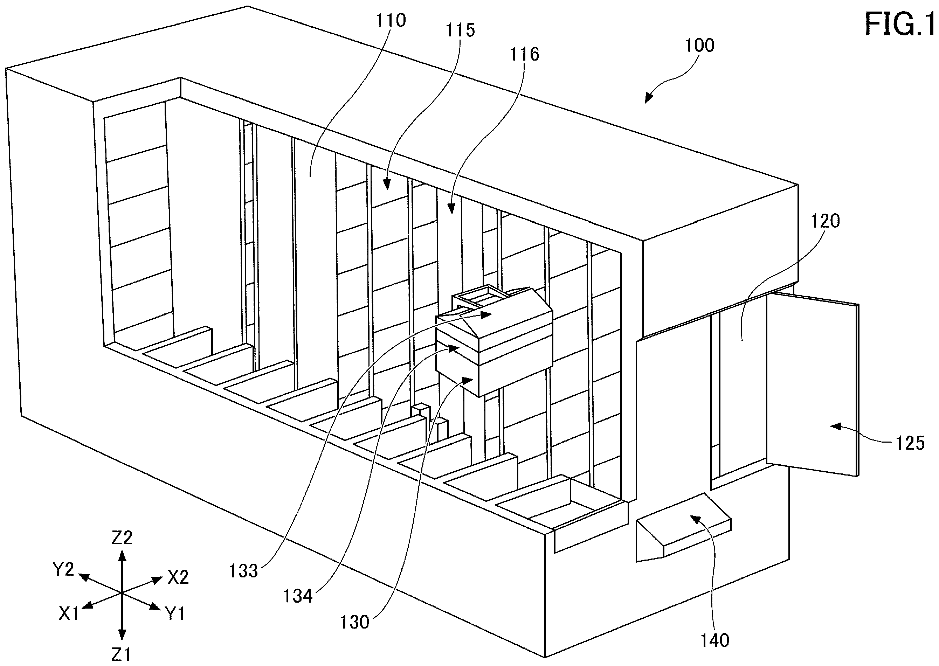

An embodiment will be described below with reference to the accompanying drawings. FIG. 1 is a diagram for explaining an example of the exterior and interior of a storage.

Note that, in the following description of the present embodiment, the X1-X2 direction on the XYZ coordinate axes shown in the figures will be referred to as "the left-right direction," the Y1-Y2 direction will be referred to as "the front-back direction," and the Z1-Z2 direction will be referred to as "the up-down direction."

A storage 100 according to the present embodiment has storage area 110, shelves 115, an automatic transport box mast 116, a loading area 120, an automatic transport box 130, an automatic transport device loader 133, a carrier box frame 134, and a display operation device 140.

The storage area 110 is an area for storing goods. The shelves 115 are where the goods to be stored in the storage area 110 are loaded. The automatic transport box mast 116 raises and lowers the automatic transport box 130 according to the height of the shelves 115.

The loading area 120 is an area where the goods to be stored in the storage area 110 are loaded, and has a door 125. Also, the loading area 120 may also serve as a pickup area where the goods transported from the storage area 110 by the automatic transport box 130 are picked up. In other words, the loading area 120 serves as an area where goods are loaded and picked up. The inside of the loading area 120 will be described later in detail.

The automatic transport box 130 transports the goods loaded in the loading area 120 to the storage area 110 by moving between the storage area 110 and the loading area 120. In other words, the automatic transport box 130 moves goods between the storage area and the area where the goods are loaded and picked up.

In the storage 100 of the present embodiment, the same number of automatic transport boxes 130 as the shelves 115 may be provided. In this case, when goods are loaded in the loading area 120, an automatic transport box 130 may be transported to a shelf 115 and stored on the shelf 115.

Also, in the storage 100 of the present embodiment, the automatic transport box 130 may have, inside, a sliding tray that can move horizontally, for example. In this case, the automatic transport box 130 may transport the goods placed on the tray in the loading area 120 to the shelves 115, move the tray horizontally, store the goods on the tray on a shelf 115, and return to the loading area 120 again.

The automatic transport device loader 133 is a holding member that holds the automatic transport box 130, and the carrier box frame 134 is a frame for making automatic transport boxes 130 of various sizes compatible.

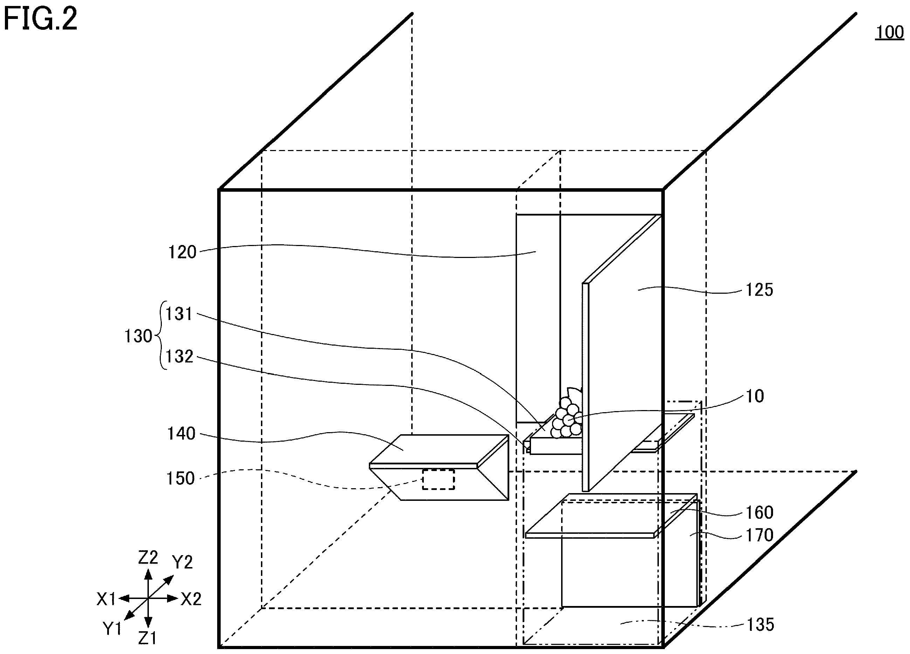

The display operation device 140 may, for example, be a touch panel or the like, display information regarding the storage 100, and accept operations on the storage 100. Also, the display operation device 140 of the present embodiment is controlled by a control device 150 (see FIG. 2) that controls the operation of the storage 100. The control device 150 will be described later in detail.

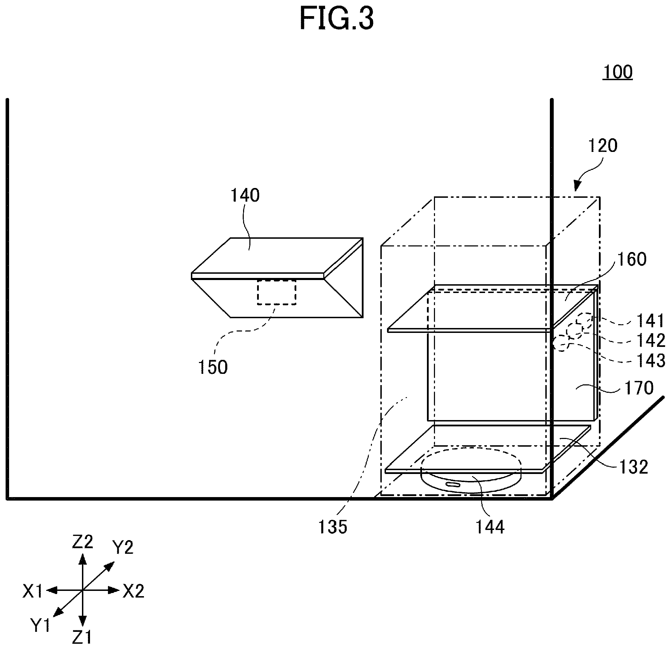

Next, the loading area 120 of the present embodiment will be described with reference to FIG. 2 and FIG. 3. FIG. 2 is a first diagram for explaining the loading area, and FIG. 3 is a second diagram for explaining the loading area.

FIG. 2 shows a state in which the automatic transport box 130 is located in the loading area 120 and goods 10 are placed in the automatic transport box 130. Also, in the example of FIG. 2, the automatic transport box 130 includes a tray 131 on which goods 10 are placed, and a transport member 132 that holds the tray 131 and moves it horizontally in the front-back direction.

The loading area 120 of the present embodiment is provided with slide doors 160 and 170 inside, and includes the area (space) 135 formed by the slide doors 160 and 170.

In the storage 100 of the present embodiment, when the goods 10 placed on the tray 131 are transported into the area 135, the state of the loading area 120 is detected. Therefore, the area 135 is, in other words, a detection area for detecting the state of the loading area 120. In the following description, the area 135 may be referred to as a "detection area 135."

The slide door 160 is for separating the loading port where the door 125 is provided, and the detection area 135. The slide door 170 is for separating the storage area 110 and the loading area 120. The slide door 160 opens and closes by moving (sliding) in the left-right direction (X1-X2 direction). The slide door 170 opens and closes by moving in the up-down direction (Z1-Z2 direction).

Also, in the storage 100 of the present embodiment, the slide door 160 and the slide door 170 open and close alternately such that the detection area 135 becomes a sealed space until the goods 10 are transported from the loading area 120 to the storage area 110. The operations of the slide door 160 and the slide door 170 will be described later in detail.

Inside the detection area 135 of the present embodiment, an imaging device 141, a temperature sensor 142, a smell sensor 143, and a weight sensor 144 are provided as detecting means for detecting the state of the loading area 120.

The imaging device 141 captures image (video) data in the detection area 135 and transmits the captured image data to the control device 150. Note that the movie data captured by the imaging device 141 may include audio data. That is, the imaging device 141 is a means for detecting sound in the loading area 120. Also, the imaging device 141 is a means for detecting the movement of the goods 10 loaded in the loading area 120.

The temperature sensor 142 may be, for example, a thermograph or the like, and detects the temperature in the loading area 120. In other words, the temperature sensor 142 of the present embodiment is a means for detecting the temperature of the goods 10 loaded in the loading area 120. The temperature sensor 142 can communicate with the control device 150, and the output of the temperature sensor 142 is sent to the control device 150.

The smell sensor 143 detects the smell in the loading area 120. In other words, the present embodiment's smell sensor 143 is a means for detecting the smell of the goods 10 loaded in the loading area 120. The smell sensor 143 can communicate with the control device 150, and the output of the smell sensor 143 is sent to the control device 150.

The weight sensor 144 detects the weight of the goods 10 placed on the tray 131. That is, the weight sensor 144 is a means for detecting the weight of the goods 10 loaded in the loading area 120. The weight sensor 144 can communicate with the control device 150, and the output of the weight sensor 144 is sent to the control device 150.

The control device 150 of the present embodiment may be provided, for example, near the display operation device 140, and determines whether or not the goods 10 loaded in the loading area 120 can be stored in the storage area 110, based on outputs from various sensors.

Note that the positions of the control device 150 in FIG. 2 and FIG. 3 are examples, and the position to place the control device 150 is by no means limited to the examples shown in FIG. 2 and FIG. 3.

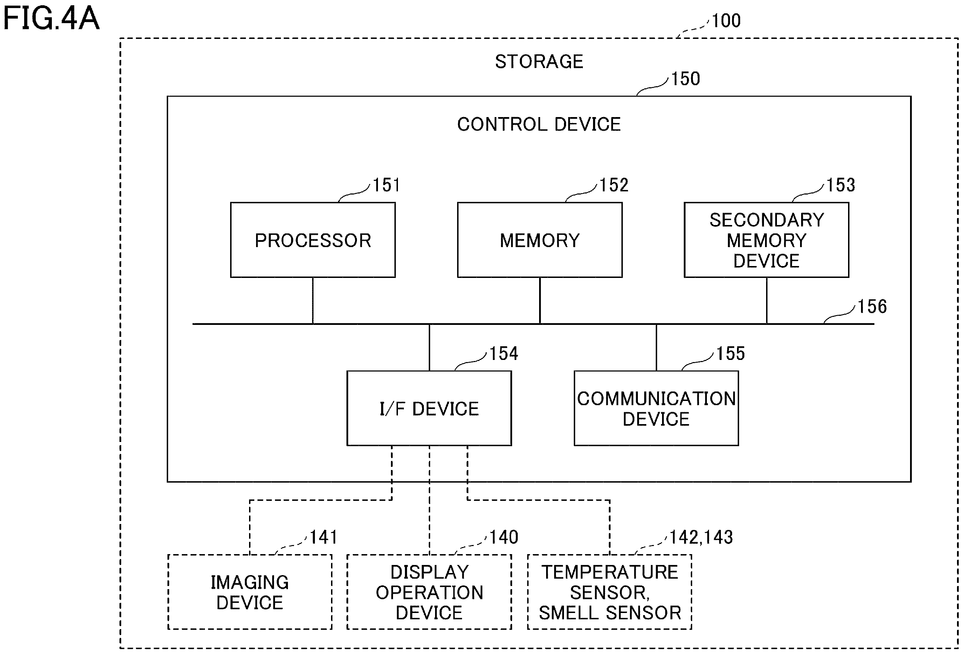

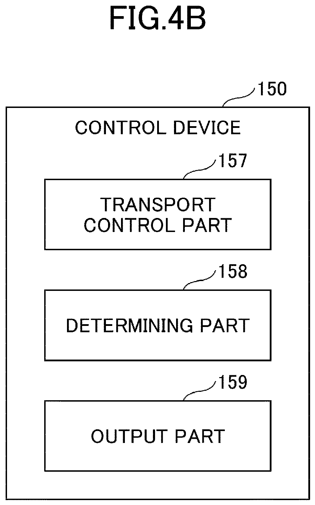

The control device 150 of the storage 100 according to the present embodiment will be described below. FIGs. 4 provide diagrams for explaining the control device, where FIG. 4A is a diagram that illustrates an example hardware structure of the control device, and FIG. 4B is a diagram for explaining the functions of the control device.

The control device 150 of the storage 100 has a processor 151, a memory 152, and a secondary memory device 153, as shown in FIG. 4A. Also, the control device 150 includes an I/F (Interface) device 154 and a communication device 155. Note that each piece of hardware in the control device 150 is interconnected via a bus 156.

The processor 151 includes various calculation devices including a CPU (Central Processing Unit). The processor 151 reads various programs (for example, an input/output program to be described later) onto the memory 152, and executes them.

The memory 152 includes primary memory devices such as a ROM (Read Only Memory) and a RAM (Random Access Memory). The processor 151 and the memory 152 form what is referred to as a computer, and the processor 151 executes various programs read on the memory 152, so that the control device 150 can implement various functions.

The secondary memory device 153 stores various programs and various data items that are used when programs are executed on the processor 151.

The I/F device 154 is a connecting device that connects the control device 150 with other devices. "Other devices" according to the present embodiment include the imaging device 141, the display operation device 140, the temperature sensor 142, and the smell sensor 143.

The communication device 155 allows transmission and reception of information between the control device 150 and external devices via a network.

The control device 150 of the present embodiment includes a transport control part 201, a determining part 202, an output part 203, and an environment control part 204, as shown in FIG. 4B. These functions are implemented when the processor 151 executes programs read onto the memory 152.

The transport control part 201 controls the transportation of the automatic transport box 130. To be more specific, when goods 10 are loaded into the automatic transport box 130, the transport control part 201 transports the automatic transport box 130 to the storage area 110 by controlling the drive mechanism that moves the automatic transport box 130, opens and closes the slide doors 160 and 170, and so forth.

The determining part 202 determines whether the goods 10 loaded in the loading area 120 can be stored in the storage area 110, based on image data captured via the I/F device 154, and outputs from various sensors, and so forth.

To be more specific, for example, the determining part 202 determines whether the goods 10 loaded in the loading area 120 produce sound, based on image data. If the goods 10 produce sound, the determining part 202 determines that the goods 10 are foreign matter that cannot be stored in the storage area 110.

Also, for example, the determining part 202 determines whether the goods 10 loaded in the loading area 120 are moving, based on image data. If the goods 10 are moving, the determining part 202 determines that the goods 10 are foreign matter that cannot be stored in the storage area 110.

Also, for example, image data of goods that are classified as foreign matter may be stored in advance in the secondary memory device 153 of the control device 150, and the determining part 202 may determine whether goods 10 are foreign matter by comparing the image data captured by the imaging device 141 against the pre-stored image data of foreign matter.

Also, for example, the determining part 202 determines whether the temperature of goods 10 loaded in the loading area 120 is in a predetermined range, based on the output of the temperature sensor 142. If the temperature of the goods 10 is outside the predetermined range, the determining part 202 determines that the goods 10 are foreign matter that cannot be stored in the storage area 110.

Also, the determining part 202 may determine whether the goods 10 loaded in the loading area 120 can be stored in the storage area 110 based on the output of the smell sensor 143. For example, when the smell sensor 143 detects a specific smell, the determining part 202 may determine that the goods 10 are foreign matter that cannot be stored in the storage area 110.

Also, the determining part 202 may determine whether the goods 10 loaded in the loading area 120 can be stored in the storage area 110 based on the output of the weight sensor 144.
For example, when the weight of the goods 10 detected by the weight sensor 144 is outside a predetermined weight range, the determining part 202 may determine that the goods 10 are foreign matter that cannot be stored in the storage area 110.

Thus, the determining part 202 of the present embodiment determines whether or not goods 10 can be stored in the storage area 110 according to the state of the loading area 120 as detected by detecting parts such as the imaging device 141, the temperature sensor 142, the smell sensor 143, and the weight sensor 144.

Furthermore, when goods 10 are identified as foreign matter, the determining part 202 determines whether or not to remove this foreign matter. To be more specific, the determining part 202 may determine, from the image indicated by the image data captured by the imaging device 141, whether the foreign matter is a creature that has intruded in the loading area 120 and should be removed. If it is determined that the foreign matter is to be removed, the environment control part 204 may remove the foreign matter.

The output part 203 sends a notification that foreign matter has been detected when the determining part 202 determines that the goods 10 cannot be stored in the storage area 110.

To be more specific, the output part 203 may send a notification that foreign matter has been detected, to the display operation device 140, and have the notification displayed on the display operation device 140. Also, the output part 203 may send a notification that foreign matter has been detected, to an external device on the network, via the communication device 155. The external device may be, for example, a management device that manages the storage 100.

The environment control part 204 controls the environment in the detection area 135 (loading area 120). To be more specific, when the determining part 202 determines that there is foreign matter to be removed, the environment control part 204 removes the foreign matter. To be more specific, the storage 100 has a removal mechanism for removing foreign matter, and the environment control part 204 removes the foreign matter by controlling this removal mechanism. The removal mechanism of the present embodiment may, for example, fill the removal area for removing foreign matter with nitrogen, carbon dioxide, or the like.

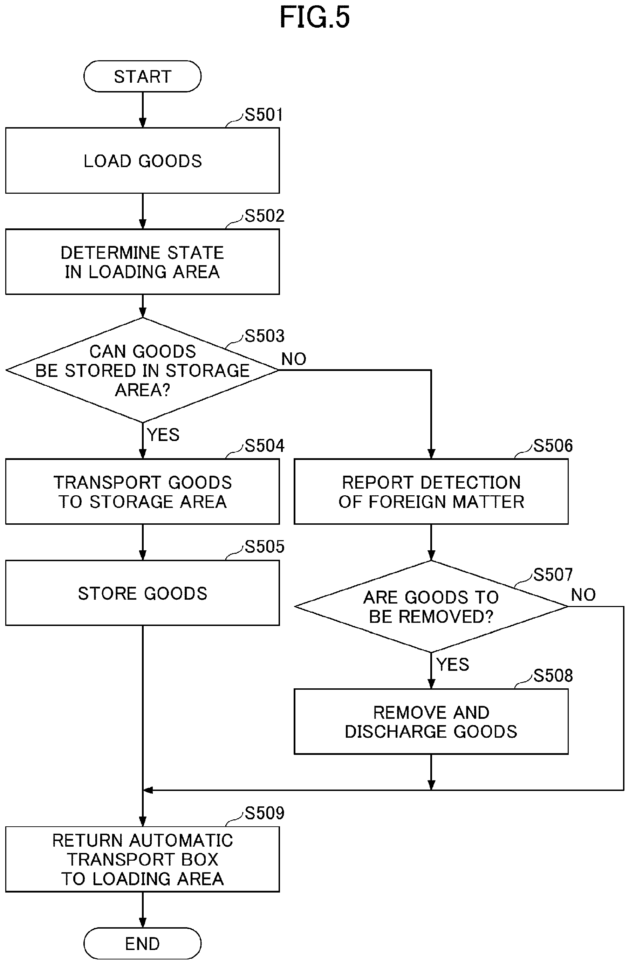

The process in the control device 150 will be described below with reference to FIG. 5. FIG. 5 is a flowchart for explaining the process in the control device included in the storage.

In the storage 100, the control device 150 detects the loading of goods 10 to the loading area 120 (step S501). To be more specific, for example, the storage 100 may include a sensor or the like that detects when goods are placed in the automatic transport box 130, and detect that goods 10 have been loaded, based on the output of this sensor. Note that the method of detecting the loading of goods 10 in the loading area 120 is by no means limited to the method described above, and any method may be used.

Subsequently, the control device 150 detects the state of the loading area 120 by means of the determining part 202 (step S502). To be more specific, the control device 150 controls the drive mechanism through the transport control part 201, to move the automatic transport box 130, in which the goods 10 are placed, to the detection area 135. Then, by means of the determining part 202, the control device 150 determines whether the goods 10 can be stored in the storage area 110, based on outputs of the imaging device 141, the temperature sensor 142, the smell sensor 143, the weight sensor 144, and so forth.

If it is determined in step S503 that the goods 10 cannot be stored in the storage area 110, the control device 150 proceeds to step S506, which will be described later.

If it is determined in step S503 that the goods 10 can be stored in the storage area 110, the control device 150 controls the drive mechanism, through the transport control part 201, to transport the automatic transport box 130 to the storage area 110 (step S504). Subsequently, by means of the transport control part 201, the control device 150 stores the goods 10 in the automatic transport box 130 on a shelf 115 (step S505), returns the automatic transport box 130 to the loading area 120 (step S509), and ends the process.

If it is determined in step S503 that the goods 10 cannot be stored in the storage area 110, in other words, if the goods 10 are identified as foreign matter, the control device 150 sends a notification that foreign matter has been detected in the loading area 120, through the output part 203 (step S506). The notification may be sent to the display operation device 140 or an external device connected to the control device 150 via a network.

Subsequently, the control device 150 determines, by means of the determining part 202, whether or not the foreign matter is to be removed (step S507). If it is determined in step S507 that the foreign matter is to be removed, the control device 150 removes and discharges the foreign matter from the loading area 120 by means of the environment control part 204 (step S508), and proceeds to step S505.

If it is determined in step S507 that the foreign matter is not to be removed, the control device 150 proceeds to step S509.

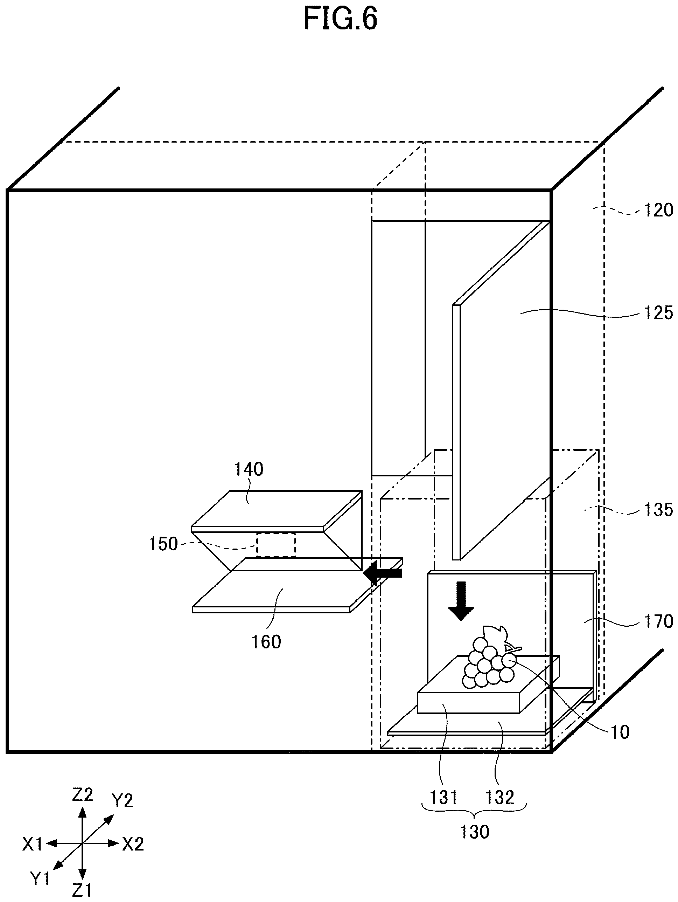

Next, the opening and closing operations of the slide doors 160 and 170 in the loading area 120 of the present embodiment will be described with reference to FIG. 6 to FIG. 8.

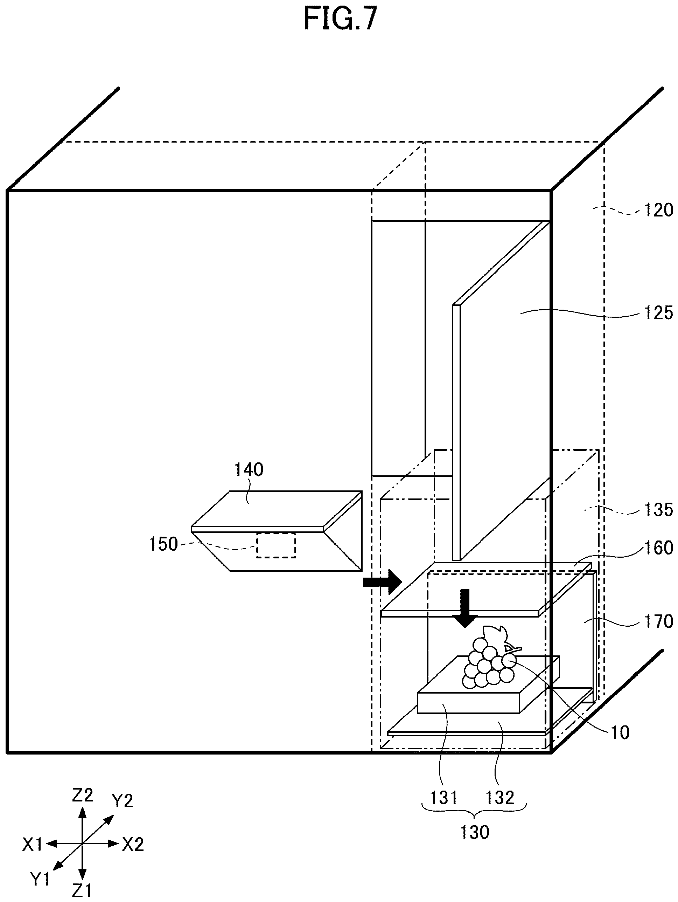

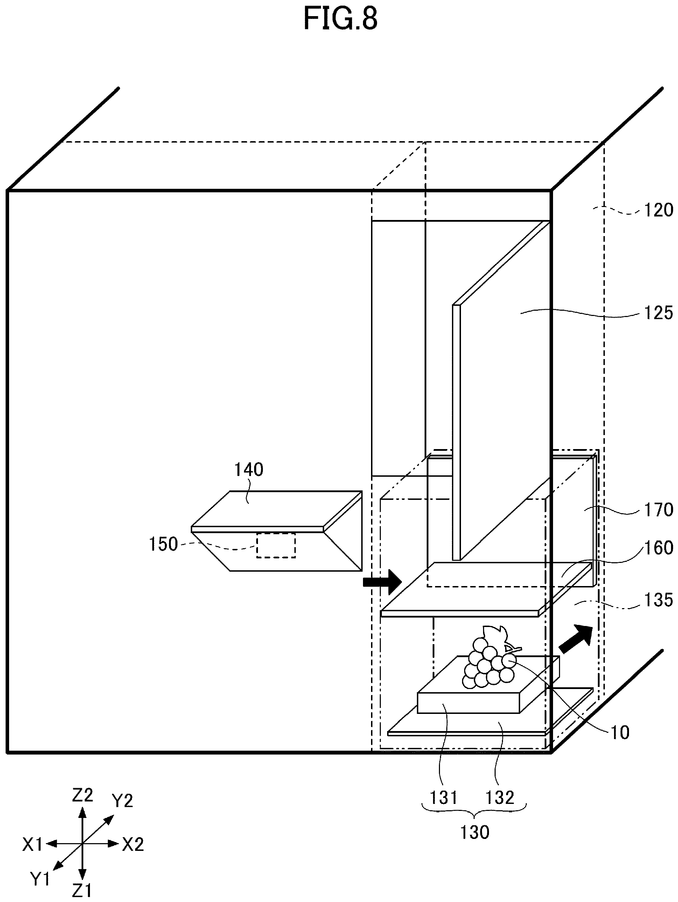

FIG. 6 is a first diagram for explaining the opening and closing operations of the slide doors; FIG. 7 is a second diagram for explaining the opening and closing operations of the slide doors; and FIG. 8 is a third diagram for explaining the opening/closing operations of the slide doors.

According to the present embodiment, when goods 10 are placed on the tray 131 in the automatic transport box 130 in the loading area 120, the slide door 160 moves (slides) in the X1 direction, and the automatic transport box 130 moves to the bottom of the loading area 120. Note that the door 125 is open in the example of FIG. 6, but the door 125 may be closed before the automatic transport box 130 starts moving. Then, the automatic transport box 130 may start moving when the door 125 is closed.

After the automatic transport box 130 moves to the bottom of the loading area 120, the storage 100 moves the slide door 160 in the X2 direction, and returns the slide door 160 back to its original position, as shown in FIG. 7. In this state, the detection area 135 is sealed with the goods 10 stored therein.

As shown in FIG. 7, with the control device 150 of the present embodiment, the determining part 202 makes the determination in step S502 of FIG. 5 while the goods 10 are in the sealed detection area 135.

When the determining part 202 determines that the goods 10 can be stored in the storage area 110, the control device 150 slides the slide door 170 in the Z2 direction to make the loading area 120 and the storage area 110 communicate with each other, as shown in FIG. 8. The control device 150 then moves the automatic transport box 130 from the loading area 120 to the storage area 110.

According to the present embodiment, before the goods 10 are transported to the storage area 110, whether the goods 10 can be stored in the storage area 110 is determined in a sealed area that is separate from the storage area 110. Then, according to the present embodiment, only when it is determined that the goods 10 can be stored in the storage area 110, the slide door 170 is moved to transport the goods 10 to the storage area 110, and the goods 10 in the automatic transport box 130 are stored on a shelf 115 in the storage area 110.

Also, if the goods 10 are identified as foreign matter in the state shown in FIG. 7, the control device 150 controls the display operation device 140 to display a notification that foreign matter has been detected. Then, the control device 150 moves the slide door 160 in the X1 direction again so as to assume the state shown in FIG. 6, and moves the automatic transport box 130 to the front of the door 125. At this time, the control device 150 may control the display operation device 140 to display a notification giving a command to pick up the foreign matter from the automatic transport box 130. Also, these notifications may be output by voice or the like.

Thus, according to the present embodiment, the automatic transport box 130 is not moved to the storage area 110 when the goods 10 are identified as foreign matter. Therefore, according to the present embodiment, foreign matter that cannot be stored in the storage area 110 can be prevented from being loaded, and inappropriate use of the storage 100 can be prevented.

To be more specific, according to the present embodiment, it is possible to prevent loading of foreign matter that is placed to make mischief or the like, and prevent pests and vermin from entering the storage area 110.

Also, if it is determined, in the detection area 135, that the goods 10 are foreign matter and that the foreign matter is to be removed, the control device 150 removes the foreign matter, by means of the environment control part 204, in the sealed detection area 135.

At this time, the environment control part 204 may remove the foreign matter in the detection area 135 in the state shown in FIG. 7. In this case, the detection area 135 also serves as a removal area.

Also, according to the present embodiment, a removal area may be provided separately from the detection area 135. In that case, the control device 150 may move the automatic transport box 130 to the removal area provided outside the loading area 120, and then remove the foreign matter.

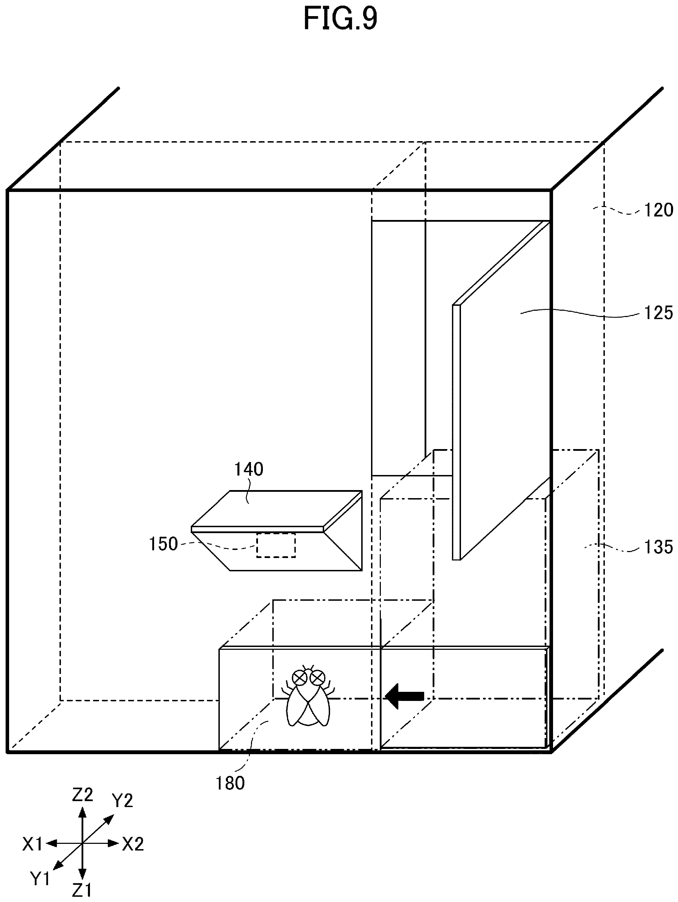

FIG. 9 is a diagram for explaining the removal area. FIG. 9 illustrates a case where a removal area 180 is provided outside the loading area 120.

In FIG. 9, the removal area 180 is provided at a position adjacent to the detection area 135. When foreign matter to be removed is detected in the detection area 135, the control device 150 moves the automatic transport box 130, located in the detection area 135, to the removal area 180. Then, by means of the environment control part 204, the control device 150 fills the inside of the automatic transport box 130 that has been moved to the removal area 180 with nitrogen, carbon dioxide, and so forth, and removes the foreign matter.

Also, the removal area 180 is provided with an outlet for discharging the foreign matter to the outside of the storage 100. The control device 150 may discharge the foreign matter to the outside of the storage 100.

Also, when the foreign matter is discharged to the outside, the control device 150 may send a notification that the foreign matter has been discharged to the outside of the storage 100, to the management device of the storage 100 or the like.

When the removal and discharge of foreign matter are completed, the control device 150 moves the automatic transport box 130 to the front of the door 125.

In this way, according to the present embodiment, foreign matter that has entered the loading area 120 can be removed and discharged, thereby preventing inappropriate use of the storage 100.

Also, when it is determined that goods 10 can be stored in the storage area 110, the control device 150 of the present embodiment moves the automatic transport box 130 to the storage area 110, and stores the goods 10 on the shelves 115 in the storage area 110. Then, the control device 150 returns the automatic transport box 130 to the detection area 135 again to resume the state shown in FIG. 8, except that no goods 10 are placed on the tray 131.

According to the present embodiment, at this time, the determining part 202 may determine whether or not there are other goods in the loading area 120.

Then, when goods are detected in the loading area 120, the control device 150 may output a notification that foreign matter has been detected.

In other words, according to the present embodiment, after goods are stored in the storage area 110, whether or not there are other goods in the loading area 120 is detected, and, if other goods are detected, a notification that other goods remain in the loading area 120 is output.

Therefore, according to the present embodiment, for example, it is possible to prevent goods other than the goods to be stored in the storage area 110 from remaining in the storage 100.

Also, according to the present embodiment, for example, the state of the loading area 120 may be detected after the user of the storage 100 takes out goods stored in the storage area 110 from the storage 100.

In this case, by means of the transport control part 201, the control device 150 moves the automatic transport box 130 to the storage area 110 in response to the user's operation on the display operation device 140, and moves the specified goods from the shelf 115 into the automatic transport box 130. Next, the control device 150 moves the automatic transport box 130 with the goods placed therein, to the loading area 120 in front of the door 125.

Next, when the goods are taken out from the automatic transport box 130, the control device 150 moves the automatic transport box 130 to the detection area 135, and the determining part 202 determines, in the detection area 135, whether or not there are goods that remain in the automatic transport box 130.

Then, if remaining goods are detected, the control device 150 outputs, by means of the output part 203, a notification that there are remaining goods, to the display operation device 140, an external management device, and so forth.

According to the present embodiment, by sending this notification, it is possible to prevent the user from forgetting to pick up goods or loading foreign matter intentionally.

Also, according to the present embodiment, the imaging device 141 is provided in the loading area 120 (detection area 135), but this is by no means limiting. According to the present embodiment, an imaging device that is different from the imaging device 141 may be attached to the housing of the storage 100 or the like.

In this case, image data captured by this imaging device is sent, for example, to the management device of the storage 100. The management device may, for example, recognize the user's face from this image data, issue a warning/alert depending on the recognition result, prevent acceptance of operations, and so forth. According to the present embodiment, misuse of the storage 100 can be reduced by using image data in this way.

Also, according to the present embodiment, if it is determined that goods identified as foreign matter may be related to a crime or the like, a notification is sent to the nearest police station by means of the output part 203, and thereupon image data may be captured by an imaging device attached to the housing of the storage 100. Note that, in this case, the image of the goods captured by the imaging device 141 may be displayed on the management device of the storage 100 so as to allow, for example, the administrator or the like of the storage 100 to check the image visually. According to the present embodiment, this operation may deter crime rates in the area where the storage 100 is installed.

Although an embodiment of the present disclosure has been described above, it should be understood that various changes in form and detail may be made without departing from the spirit and scope of the claims attached herewith.

This international application is based on and claims priority to Japanese Patent Application No. 2021-059435, filed on March 31, 2021, and the entire contents of Japanese Patent Application No. 2021-059435 are incorporated herein by reference.

### Reference Signs Lis

100 storage
110 storage area
120 loading area
130 automatic transport box
131 tray
132 transport member
140 display operation device
150 control device
160, 170 slide door
180 removal area

## Claims

1. A storage comprising:
an automatic transport part configured to move between a loading area where a user loads goods and a storage area where the goods loaded by the user are stored;
a detecting part configured to detect a state in the loading area; and
a determining part configured to determine whether the goods loaded in the loading area can be stored in the storage area, based on the state in the loading area detected by the detecting part.

2. The storage according to claim 1,
wherein the detecting part detects sound, and
wherein the determining part determines whether the loaded goods can be stored in the storage area based on the sound detected by the detecting part.

3. The storage according to claim 1 or 2,
wherein the detecting part detects movement of the goods loaded in the loading area, and
wherein the determining part determines that the loaded goods cannot be stored in the storage area based on a detection result by the detecting part.

4. The storage according to any one of claims 1 to 3,
wherein the detecting part detects a temperature of the goods loaded in the loading area, and
wherein the determining part determines that the loaded goods cannot be stored in the storage area when the temperature of the loaded goods is outside a predetermined range, based on a detection result by the detecting part.

5. The storage according to any one of claims 1 to 4,
wherein the detecting part detects a weight of the goods loaded in the loading area, and
wherein the determining part determines whether the loaded goods can be stored in the storage area based on the weight of the loaded goods detected by the detecting part.

6. The storage according to any one of claims 1 to 5,
wherein the detecting part detects a smell of the goods loaded in the loading area, and
wherein the determining part determines whether the loaded goods can be stored in the storage area based on the smell of the loaded goods in the loading area detected by the detecting part.

7. The storage according to any one of claims 1 to 6, further comprising a removal part configured to remove foreign matter when the loaded goods are identified as the foreign matter that cannot be stored in the storage area.

8. The storage according to claim 7, wherein the removal part is provided in the loading area.

9. The storage according to any one of claims 1 to 8, wherein, after the loaded goods are transported to the storage area by the automatic transport part, the determining part further determines whether or not there are other goods in the loading area, based on the detection result by the detecting part.

10. The storage according to any one of claims 1 to 9, further comprising an output part configured to send a notification that foreign matter that cannot be stored in the storage area has been detected when the loaded goods are identified as the foreign matter.

11. The storage according to claim 10, wherein, when other goods are detected in the loading area after the loaded goods are transported to the storage area, the output part sends a notification that the other goods remain in the loading area.

12. The storage according to claim 10 or 11, wherein the output part sends the notification to an external device via a network.

13. The storage according to claim 10 or 11, further comprising a display part configured to display information that shows a state in the storage,
wherein the output part displays the notification on the display part.

14. A storage comprising:
an automatic transport part configured to move goods between an area where the goods are loaded and picked up, and a storage area where the goods loaded into the area are stored;
a detecting part configured to detect a state in the area; and
a determining part configured to determine whether the goods moved from the storage area to the area have been taken out from the area, based on the state detected by the detecting part.
